# EUROPEAN PATENT SPECIFICATION

(11) **EP 3 823 889 B1**
(45) Date of publication and mention of the grant of the patent: **30.08.2023**
(21) Application number: 19749455.2
(22) Date of filing: 16.07.2019
(51) Int. Cl.: B62M 6/80, H01F 38/14

(54) **MAGNETIC TRANSFORMER SYSTEM FOR WIRELESS CHARGING**
MAGNETISCHES TRANSFORMATORSYSTEM FÜR DRAHTLOSES LADEN
SYSTÈME DE TRANSFORMATEUR MAGNÉTIQUE DE CHARGE SANS FIL

(30) Priority: 16.07.2018 NL 2021309
(43) Date of publication of application: 26.05.2021
(73) Proprietor: Fesla Charge B.V., 2629 JD Delft (NL)
(72) Inventor: FERREIRA, Jan Abraham, 2600 AA Delft (NL)
(74) Representative: EP&C
(86) International application number: PCT/NL2019/050449
(87) International publication number: WO 2020/017960

(56) References cited:
- EP-A1- 0 902 523
- EP-A1- 2 889 885
- JP-A- H10 215 532

## Description

### Field of the invention

The present invention relates to a magnetic transformer system, e.g. a magnetic transformer system for wireless vehicle charging, such as electric bicycle charging. In a further aspect the present invention relates to a wireless bicycle charging system.

### Background art

European patent application EP-A-2 399 817 discloses a holding device by which an electrically driven vehicle, in particular a bicycle with electric motor is supported on a wall, a floor or a ceiling. The holding device comprises a holding arm for supporting a bicycle and the holding arm comprises a locking head to which the bicycle can be connected. The locking head is receivable in a receiver clutch mounted on the bicycle. Both the locking head and receiver clutch comprise a coil through which the bicycle can be charged inductively.

A disadvantage of the holding device is that the locking head needs to be aligned rather accurately with the receiver clutch for being properly received therein and to ensure sufficient inductive coupling is achieved.

European patent application EP-A-0 902 523 discloses a charging system for motordriven vehicle. The charging system comprises a primary charging device disposed at a predetermined location, and a secondary charging device mounted on the body of a bicycle. When the secondary coil unit is positioned close to the primary coil unit, the battery can be charged by the charging system.

Japanese patent publication JP-H10-215532 discloses a charging system for an electrically powered vehicle that is capable of simply and efficiently charging a battery, without carrying out any physical connection between the power source and the battery by a user. For this, a second coil section is set to the front end of a bearing stand of an electrically-powered bicycle. A battery mounted thereon is disposed in the vicinity of a first coil section placed inside of a charging device. By making use of electromagnetic induction operation caused between both coils, the battery is charged and, at the same time, the first coil section can be moved to a position which reduces the magnetic resistance between both coils to a minimum.

European patent publication EP-A-2 889 885 discloses a power feeding coil unit that includes a power feeding coil, and first and second auxiliary coils located outside of the region defined by a wire of the power feeding coil. The axis of the first auxiliary coil and the axis of the second auxiliary coil are substantially perpendicular to the axis of the power feeding coil.

### Summary of the invention

The present invention seeks to provide a magnetic transformer system for use in wireless vehicle charging, such as an electric bicycles or e-bike for short, wherein the magnetic transformer system is less susceptible to system tolerances and alignment variations in wireless charging applications, and provides for a versatile power and data transfer system.

According to the present invention, a magnetic transformer system is provided as claimed in claim 1. The magnetic transfer system comprises a primary core member provided with primary coil windings and a secondary core member provided with secondary coil windings, wherein the primary and secondary coil windings are arranged for inductive engagement, e.g. for power transfer through inductive coupling. The primary core member comprises a first end portion and an opposing second end portion providing an air gap between the first and second end portions, wherein the secondary core member is moveably receivable within the air gap of the primary core member and retractable therefrom, and wherein a length of the secondary core member is smaller than a gap distance of the air gap. The primary core member further comprises auxiliary primary coil windings and the secondary core member comprises auxiliary secondary coil windings, wherein the auxiliary primary and auxiliary secondary coil windings are arranged for auxiliary inductive engagement, e.g. for communication purposes through auxiliary inductive coupling, and wherein the inductive engagement between the primary and secondary coil windings is substantially orthogonal to the auxiliary inductive engagement between the auxiliary primary and auxiliary secondary coil windings.

The magnetic transformer system of the present invention allows the secondary core member and secondary coil windings to couple inductively with the primary core member and primary coil windings when the second core member is operationally arranged/received within the air gap between the first and second end portions of the primary core member. Since the length of the secondary core member is smaller than the gap distance between the first and second end portions, the secondary core member is moveable, e.g. linearly and rotationally moveable, within the air gap without impairing inductive coupling between the primary and secondary coil windings, and without impairing auxiliary inductive coupling between the auxiliary primary and auxiliary secondary coil windings, thereby making the magnetic transformer system less susceptible to dimensional tolerances and alignment variations of the secondary core member with respect to the primary core member. By imposing substantial orthogonality between the inductive engagement of the primary and secondary coil windings and the auxiliary inductive engagement of the auxiliary primary and auxiliary secondary coil windings, induction based power transfer and induction based communication are physically decoupled, allowing for more robust communication through the auxiliary inductive coupling with minimum disturbance from the induction based power transfer.

In a further aspect the present invention relates to a wireless bicycle charging system for charging an electric bicycle, comprising a fixed charger unit, a bicycle charger unit for attachment to an electric bicycle, and the aforementioned magnetic transformer system. The fixed charger unit is provided with a primary magnet assembly comprising the primary core member with primary coil windings for connection to an AC power source. The bicycle charger unit is then provided with a secondary magnet assembly comprising the secondary core member with secondary coil windings, as well as a rectifier unit coupled to the secondary coil windings, and wherein the rectifier unit is further connectable to a rechargeable battery of the electric bicycle.

By incorporating the magnetic transformer system into the wireless bicycle charging system, a robust charging solution is obtained which is able to cope with a relative inaccurate placement of the secondary core member with respect to the primary core member, making it much more convenient for a user to quickly park the electric bicycle for a charging session yet ensure optimal charging performance. Moreover, as the bicycle charging system is wireless, adequate moisture and particle ingress protection can be provided to make the wireless bicycle charging system less sensitive to harsh environmental conditions.

### Brief description of drawings

The present invention will now be described by way of reference to a number of illustrative and exemplary embodiments, as shown in the accompanying drawings in which:
Figure 1 shows a three dimensional view of a magnetic transformer system according to an embodiment of the present invention;
Figure 2 shows a cross section of a magnetic transformer system according to an embodiment of the present invention;
Figure 3 shows a schematic view of a wireless bicycle charging system according to an embodiment of the present invention;
Figure 4 shows a wireless bicycle charging system utilizing a moveable arm for engagement with an electric bicycle according to an embodiment of the present invention;
Figure 5 shows a wireless bicycle charging system utilizing a fixed platform for engagement with a bicycle kickstand according to an embodiment of the present invention; and
Figure 6 shows a wireless bicycle charging system utilizing a movable arm pivotally connected to a floor base embedded in the floor according to an embodiment of the present invention.

### Description of embodiments

Strong incentives and directives exist to reduce emissions related to mobility resulting in a very large future market for electric vehicles (EVs). Market growth of the lightest version of EVs, such as electric (assisted) bicycles and light electric scooters, is hampered by the availability of charging points, however.

Conventional charging points typically utilize a wired connection with charging connector for connection to an electric bicycle for charging a battery thereof. However, since electric bicycles are often parked outdoors exposed to wind, rain and other harsh conditions, this will often lead to corrosion, oxidation and/or mechanical failure of the electrical connections used.

It has been found that there is a need for electric chargers that are capable to quickly and conveniently connect to an electric bicycle and retract therefrom when it is not in use. This is particular advantageous for large numbers of electric bicycles that are available for rent, for example, where large numbers of electric bicycles need to be charged in a convenient fashion.

It has also been found that there is need for robust electric chargers that can operate reliably in harsh environmental conditions and wherein these chargers ensure reliable connection to the electric bicycle with maximum ease as well as with maximum efficiency and maximum charging speeds.

In view of the aforementioned needs, the present invention provides a magnetic transformer system for wireless vehicle charging, e.g. wireless bicycle charging, that fulfils at least in part the above needs. For ease of reference, an "electric bicycle" may be understood as an electronically pedal assisted bicycle as well as fully electric scooters, motorcycles and the like.

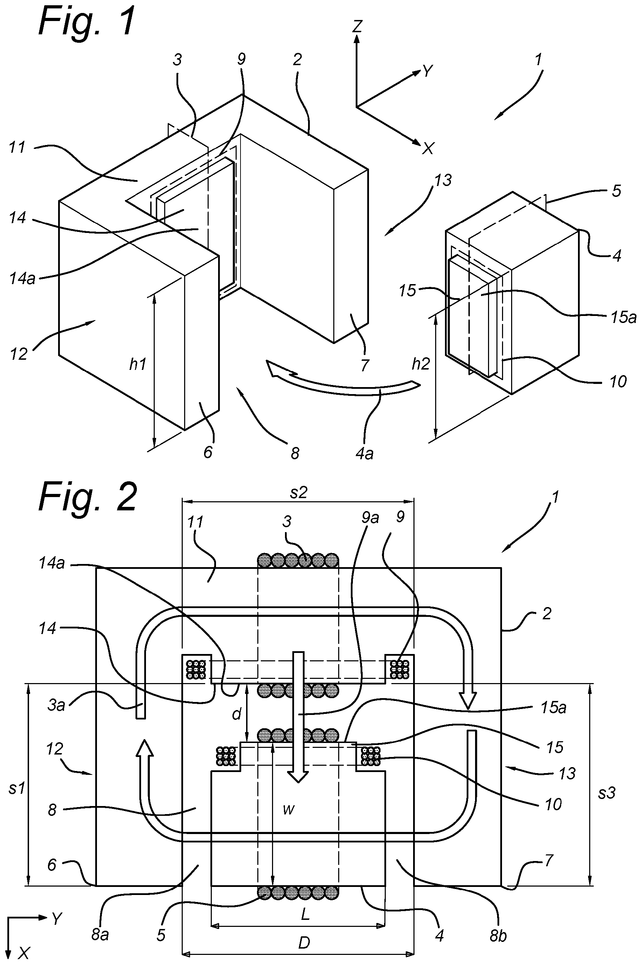

Figure 1 and 2 each show a three dimensional view and a cross sectional view, respectively, of a magnetic transformer system 1 according to embodiments of the present invention.

In the embodiment shown, the magnetic transformer system 1 comprises a primary core member 2 provided with primary coil windings 3 and a secondary core member 4 provided with secondary coil windings 5. The primary and secondary coil windings 3, 5 are arranged for inductive engagement, such as induction based power transfer between the primary coil windings 3 and the secondary coil windings 5.

In an exemplary embodiment, the primary core member 2 and the secondary core member 4 are each made of a ferromagnetic material exhibiting high permeability relative to surrounding air, thereby allowing a magnetic field to extend through the cores 2, 4. In a further exemplary embodiment, the primary and secondary coil windings 3, 5 are made of a current carrying wire made of a suitable conductive material, such as copper.

The primary core member 2 further comprises a first end portion 6 and an opposing second end portion 7 between which an air gap 8 is provided, and the secondary core member 4 is moveably receivable within the air gap 8 of the primary core member 2 and is retractable therefrom, The depicted arrow 4a shows an exemplary movement of the primary core member 2 into the air gap 8. Further, the secondary core member 4 has a length L which is smaller than a gap distance D of the air gap 8. Here, the gap distance D is the distance between the first end portion 6 and the opposing end portion 7.

According to the invention, as shown in Figure 2, the primary core member 2 further comprises auxiliary primary coil windings 9 and the secondary core member 4 comprises auxiliary secondary coil windings 10. The auxiliary primary coil windings 9 and the auxiliary secondary coil windings 10 are arranged for auxiliary inductive engagement, such as for (data) communication purposes through auxiliary inductive coupling between the auxiliary primary and auxiliary secondary coil windings 9, 10.

It is noted that the word "auxiliary" may be construed as "supplementary" or "subsidiary", so that inductive engagement between the auxiliary primary coil windings 9 and the auxiliary secondary coil windings 10 can be clearly distinguished from the inductive engagement between the primary and secondary coil windings 3, 5.

In Figure 2 it is further shown that the inductive engagement between the primary and secondary coil windings 3, 5 is substantially orthogonal to the auxiliary inductive engagement between the auxiliary primary coil windings 9 and the auxiliary secondary coil windings 10.

According to the present invention, the secondary coil windings 5 are capable of inductively coupling to the primary coil windings 3 when the secondary core member 4 is operationally arranged/received within the air gap 8 between the first and second end portions 6, 7 of the primary core member 2. Since the length L of the secondary core member 4 is smaller than the gap distance D between the first and second end portions 6, 7, the secondary core member 4 is moveable, e.g. linearly and rotationally moveable, within the air gap 8. Moreover, even though the secondary core member 4 loosely fits inside the air gap 8, this does not significantly impair inductive coupling between the primary and secondary coil windings 3, 5 as well as the auxiliary inductive coupling between the auxiliary primary and auxiliary secondary coil windings 9, 10. Therefore, the magnetic transformer system 1 of the present invention thus operates efficiently even when the secondary core member 4 loosely fits inside the air gap 8 for many positions and orientations of the secondary core member 4 within the air gap 8.

To clarify this point, as indicated by the x-y-z axes, because the length L of the secondary core member 4 is less than the gap distance D, the secondary core member 4 is able to move in the y direction, but also the x and z direction. Moreover, the secondary core member 4 is able to rotate about the x, y, and z-axes. Note that the y direction is in the same direction of the gap distance D. So by virtue of a loose fit of the secondary core member 4 between the first and second end portions 6, 7 of the primary core member 2, the magnetic transformer system 1 is less susceptible and sensitive to alignment variations of the secondary core member 4 with respect to the primary core member 2.

Orthogonality between the inductive engagement of the primary and secondary coil windings 3, 5 and the auxiliary inductive engagement of the auxiliary primary and auxiliary secondary coil windings 9, 10 provides physical decoupling of e.g. induction based power transfer and induction based communication. This in turn allows for robust induction based (data) communication with minimum interference from induction based power transfer.

According to the present invention, inductive engagement between the primary coil windings 3 and the secondary coil windings 5 is achieved through a magnetic field 3a as shown in Figure 2 when the magnetic transformer system 1 is in operation. Likewise, the auxiliary inductive engagement between the auxiliary primary and auxiliary secondary coil windings 9, 10 is achieved through an auxiliary magnetic field 9a as indicated. From Figure 2 is seen that the magnetic field 3a and the auxiliary magnetic field 9a extends through the primary and secondary core member 2, 4 and are substantially orthogonal to one another.

In an exemplary embodiment, the length L of the secondary core member 4 is at least 2 mm smaller/shorter than the gap distance D between the first and second end portion 6, 7 of the prime core member 2. This provides a sufficiently loose fit of the secondary core member 4 within the air gap 8 for linear and rotational movement of the secondary core member 4 between the first and second end portions 6, 7.

As shown in Figure 2, the difference between the length L and the gap distance D allows the secondary core member 4 to move in the y-direction without increasing the magnetic reluctance between the first and second end portions 6, 7 of the primary core member 2. For example, when the secondary core member 4 moves in a positive y-direction (to the right), magnetic reluctance of a first air space 8a between the first end portion 6 and the secondary core member 4 increases whilst a magnetic reluctance of a second air space 8b between the second end portion 7 and the secondary core member 4 decreases. The overall magnetic reluctance between the first and second end portions 6, 7 does not change, however.

In an embodiment, the primary core member 2 is a U-shaped core member comprising a base section 11 provided with the primary coil windings 3 and spaced apart first and second leg sections 12, 13 each of which projects from the base section 11. The first leg section 12 comprises the first end portion 6 of the primary core member 2 and the second leg section 13 comprises the second end portion 7 of the primary core member 2.

As depicted in Figure 1, the U-shaped core member with the substantial parallel first and second leg sections 12, 13 provides an open sided cavity/channel comprising the air gap 8 in which the secondary core member 4 can be moveable received and retracted therefrom. This is particularly advantageous for wireless charging applications wherein the secondary core member 2 is to be arranged within the air gap 8 of the primary core member 2 with, preferably, very little effort.

As shown, the U-shaped core member facilitates linear movement of the secondary core member 2 in the x, y and z directions, wherein the x-direction may be associated with an insertion direction and retraction direction of the secondary core member 4. Once again, the difference between the length L of the secondary core member 2 and the gap distance D of the air gap 8 further allows for rotational movement of the secondary core member 2 around the x, y, and z axes between the first and second leg sections 12, 13, thereby making the magnetic transformer system 1 less sensitive to alignment variations without diminishing inductive coupling between the first and secondary coil windings 3, 5 and auxiliary inductive coupling between the auxiliary primary and auxiliary secondary coil windings 9, 10.

In an embodiment, the U-shaped core member may further comprises an auxiliary primary core portion 14 projecting from the base section 11 into the air gap 8, wherein the auxiliary primary core portion 14 is provided with the auxiliary primary coil windings 9. As shown, the auxiliary primary coil windings 9 may be wound around the auxiliary primary core portion 14.

As further shown in Figure 1 and 2, the secondary core member 4 may further comprises an auxiliary secondary core portion 15 projecting from the secondary core member 4, wherein the auxiliary secondary core portion 15 is provided with the auxiliary secondary coil windings 10. In this embodiment, the auxiliary primary and auxiliary secondary core portions 14, 15 are configured to face each other when the secondary core member 4 is operationally arranged within the air gap 8, thereby achieving optimal auxiliary inductive engagement between the auxiliary primary and auxiliary secondary coil windings 9, 10.

The auxiliary primary and auxiliary secondary core portions 14, 15 allow the auxiliary primary coil windings 9 and the auxiliary secondary coil windings 10 to be arranged in compact fashion within the primary and secondary coil windings 3, 5, respectively. For example, as depicted in Figure 2, the auxiliary primary core portion 14 may have a length less than a length s2 of the base section 11, so that the auxiliary primary coil windings 9 may be wound around the auxiliary primary core portion 14 substantially flush with an outward face 14a of the auxiliary primary core portion 14. The primary coil windings 3 may then extend in unimpeded fashion along the outward face 14a of the auxiliary primary core portion 14.

Likewise, the auxiliary secondary core portion 15 may have a length which is less than the length L of the secondary core portion 4, so that the auxiliary secondary coil windings 10 may be wound around the auxiliary secondary core portion 15 substantially flush with an outward face 15a of the auxiliary secondary core portion 15. The secondary coil windings 5 may then extend in unimpeded fashion along the outward face 15a of the auxiliary secondary core portion 15. As shown in Figure 2, the secondary core member 4 may be "I"-shaped due to the projecting auxiliary secondary core portion 15.

Coming back to the difference between the length L of the secondary core member 4 and the gap distance D, the length L is at least 2 mm smaller/shorter than the gap distance D to allow sufficient linear and rotational movement of the secondary core member 4 within the air gap 8. This would then translate to, for example, a first air space 8a of at least 1 mm between the secondary core member 4 and the first end portion 6 or first leg section 12, and a second air space 8b of at least 1 mm between the secondary core member 4 and the second end portion 7 or second leg section 13, assuming the secondary core member 4 is centred within the air gap 8.

Therefore, a difference Δ between the length L and the gap distance D, i.e. Δ = D-L, may satisfy Δ ≥ 2 mm, representing an embodiment of a lower bound for Δ. In further embodiments an upper bound to Δ may be contemplated to maintain sufficient inductive coupling and limiting magnetic reluctance. For example, in an embodiment the difference Δ between the length L and the gap distance D may lie between 2 mm and the length L of the secondary core member 4, i.e. 2 mm ≤ Δ ≤ L. This would translate to a first and second air space 8a, 8b of at least 1 mm to half the length L (i.e. L/2) of the secondary core member 4, assuming a centre position of the secondary core member 4 within the air gap 8. So in case the length L of the secondary core member 4 is 10 mm, then the gap distance D may be taken to be 12 mm to at most 20 mm, e.g. first and second air spaces 8a, 8b of 1 mm to 5 mm each when the second core member 4 is centred within the air gap 8. Of course, the upper bound Δ ≤ L may be increased, i.e. Δ ≤ k * L where k > 1, when increased freedom for linear and/or rotational movements of the secondary core member 4 are required.

To provide an example of what dimensions for the magnetic transformer system 1 may be considered, in an exemplary embodiment the length s2 of the base section 11 of the primary core member 2 may be around 20 mm, which would imply D ≈ s2, i.e. a gap distance D of around 20 mm by having substantially parallel first and second leg sections 12, 13 as shown in Figure 2. Then given the bounds for Δ, this would then yield a length L for the secondary core member 4 to be 10 mm to 18 mm, thereby satisfying 2 ≤ 20 - L ≤ L.

In case of a U-shaped primary core member 2, see Figure 2, a clearance is provided between the base section 11 and the secondary core member 4, wherein the clearance may be defined as a secondary gap distance d between the outward face 14a of the auxiliary primary core portion 14 and the outward face 15a of the auxiliary secondary core portion 15. In an embodiment, this secondary gap distance d is at least 1 mm to allow for sufficient linear and/or rotational movement of the secondary core member 4 within the air gap 8. In a general embodiment, the secondary gap distance d may lie between 1 mm and half of a width w of the secondary core member 4. e.g. 1 mm ≤ d ≤ w/2. So a width w = 10 of the secondary core member 4 may yield a secondary gap distance d between 1 mm and 5 mm to maintain sufficient auxiliary inductive coupling between the auxiliary primary and auxiliary secondary core windings 9, 10.

Of course, an upper bound for the secondary gap distance d may be higher, e.g. d ≤ r * w where r > 1/2, when more linear and/or rotational movement of the secondary core member 4 is required.

Taking the secondary gap distance d and the width w of the secondary core member 4 into account, then lengths s1, s2 of the first and second leg sections 12, 13 may be given. That is, as depicted in Figure 2, the length s1 of the first leg section 12 and the length s3 of the second leg section 13 may satisfy the relations s1 ≥ max {d} + w, and s3 ≥ max {d} + w. By anticipating a maximum value for the secondary gap distance d allows the secondary core member 4 to remain fully received within the air gap 8, so wherein the secondary core member 4 does not protrude beyond the first and secondary leg sections 12, 13 out of the air gap 8 when the magnetic transformer system 1 is in operation.

In an exemplary embodiment, the length s1, s3 are taken equal, i.e. s1 = s3 allowing for a substantial symmetric magnetic field distribution through the secondary core member 4 and the first and second leg section 12, 13. Exemplary lengths for s1, s3 of each the first and second leg sections 12, 13 may be 15 mm or larger.

In an even further exemplary embodiment, the primary core member 2 may have a height h1, e.g. height h1 of the first and second leg sections 12, 13, which is equal or larger than a height h2 of the secondary core member 4, so that the secondary core member 4 will have freedom of movement in the z-direction without excessively extending beyond the air gap 8 in the z direction. This will then maintain the magnetic field 3a through the secondary core member 4 and the first and second leg sections 12, 13 as much as possible for a varying positions in the z direction of the secondary core member 4. An exemplary height h1 would be around 60 mm and an exemplary height h2 would be around 50 mm, so that the secondary core member 4 has considerable freedom of movement in the z direction of the air gap 8 without impairing inductive and axillary inductive coupling.

On a final note with respect to the bounds 2 mm ≤ Δ ≤ k*L and 1 mm ≤ d ≤ r* w, the skilled person in the art will understand that specific bounds are highly dependent on system specifications such as charging and communication power requirements, efficiency requirements, alignment requirements etc. and a such the actual values for {D, d, s1, s2, s3} and {L, w} are chosen on the basis of specific charging applications.

In an advantageous embodiment, the auxiliary primary coil windings 9 comprise thinner wire than wire of the primary coil windings 3 and/or wherein the auxiliary secondary coil windings 10 comprise thinner wire than wire of the secondary coil windings 5. In this embodiment it is taken into account that the auxiliary primary coil windings 9 and the auxiliary secondary coil windings 10 may be used for induction based communication, which does not require high current levels through the auxiliary primary and auxiliary secondary coil windings 9, 10 compared to induction based power transfer through the primary and secondary coil windings 3, 5. In other words, the auxiliary primary and secondary coil windings 9, 10 are arranged for low power (data) transfer, while the primary and secondary coil windings 3, 5 are arranged for high power (energy) transfer. In addition or alternatively, the auxiliary primary and secondary coil windings 9, 10 (low power transfer) may be arranged to operate in a higher frequency range than the primary and secondary coil windings 3, 5 (high power transfer).

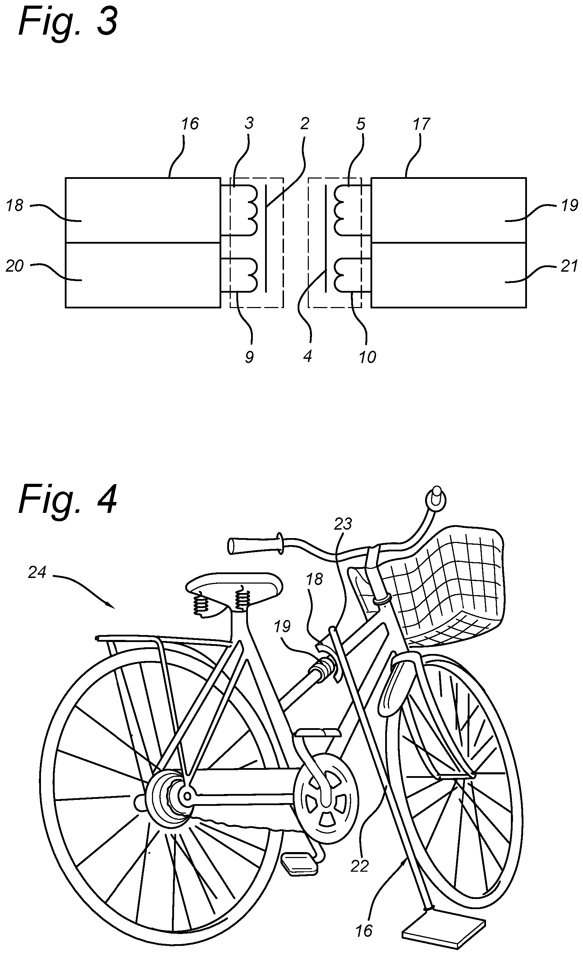

In a further aspect the present invention relates to a wireless bicycle charging system for charging an electric bicycle. Figure 3 shows a schematic view of a wireless bicycle charging system according to an embodiment of the present invention. In the embodiment shown the wireless bicycle charging system comprises a fixed charger unit 16, a bicycle charger unit 17 for attachment to an electric bicycle, and the aforementioned magnetic transformer system 1. The fixed charger unit 16 is provided with a primary magnet assembly 18 comprising the primary core member 2 with primary coil windings 3 for connection to an AC power source. The bicycle charger unit 17 is then provided with a secondary magnet assembly 19 comprising the secondary core member 4 with secondary coil windings 5 and a rectifier unit (not shown) connected to the secondary coil windings 5, wherein the rectifier unit, e.g. AC to DC rectifier, is connectable to a rechargeable battery of the electric bicycle such that the rechargeable battery can be charged.

In this embodiment, the secondary core member 4 is part of the bicycle charger unit 17 as the secondary core member 4 is often lighter than the primary core member 2 due to the first and second end portion 6, 7 thereof, which end portions add further weight. As a result the bicycle charger unit 17 is as light as possible such that no unnecessary weight is carried along when using the electric bicycle. Note that in this exemplary embodiment, a magnetic transformer system 1 may be employed having only the primary coil windings 3 and secondary coil windings 5, e.g. to effectively transfer power for charging.

The magnetic transformer system 1 allows the wireless bicycle charging system to operate reliably in harsh environmental conditions, and a reliable connection between the fixed charger unit 16 and the bicycle charger units 17 can be established with little effort from the user. As explained above, by virtue of a loose fit of the secondary core member 4 within the air gap 8 between the first and second end portion 6, 7, the user need not position the bicycle charging unit 17 with extreme accuracy to insert the secondary core member 4 into the air gap 8 of the primary core member 2.

As for communications between the fixed charger unit 16 and the bicycle charging unit 17, an embodiment is provided wherein the fixed charger unit 16 further comprises a primary communication system 20 connected to the auxiliary primary coil windings 9 of the primary core member 2 and wherein the bicycle charger unit 17 comprises a secondary communication system 21 connected to the auxiliary secondary coil windings 10 of the secondary core member 4.

The primary and secondary communication systems 20, 21 allow e.g. for reliable monitoring and control of a charging session through auxiliary inductive coupling between the auxiliary primary and auxiliary secondary coil windings 9, 10. As noted earlier, orthogonality of the inductive engagement between the primary and secondary coil windings 3, 5 and the auxiliary inductive engagement between the auxiliary primary and auxiliary secondary coil windings 9, 10 allows for minimal physical coupling, hence minimal interference and lower noise levels in induction based communications through the auxiliary inductive engagement.

In an exemplary embodiment, the wireless bicycle charging system may be configured to transfer 50 to 250 Watts of power from the fixed charger unit 16 to the bicycle charger unit 17, where the AC power source may operate around 85kHz.

There are various configurations possible of the wireless bicycle charging system, one of which is depicted in Figure 4 showing a wireless bicycle charging system utilizing a moveable arm 22 for engagement with an electric bicycle 24 according to an embodiment of the present invention. In the embodiment shown, the fixed charger unit 16 further comprises a moveable arm member 22 provided with a bike engagement portion 23, wherein the bike engagement portion 23 comprises the primary magnet assembly 18 for insertion or retraction of the secondary core member 4 of the secondary magnet assembly 19 into or from the air gap 8 of the primary core member 2.

In this embodiment the moveable arm member 22 can be easily moved by a user toward or away from the electric bicycle 24 for insertion or retraction of the secondary core member 4 into or from the primary core member 2. Doing so does not require great accuracy as the secondary core member 4 loosely fits inside the air gap 8 of the primary core member 2. In an exemplary embodiment, the moveable arm member 22 is pivotally connected to the floor by means of a hinge member.

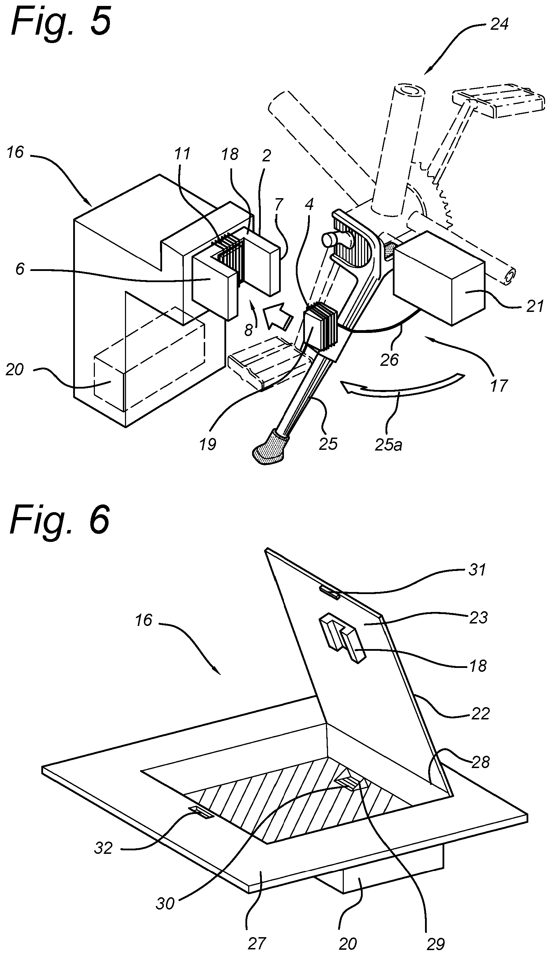

Figure 5 shows a wireless bicycle charging system utilizing a fixed charger unit 16 for engagement with a bicycle kickstand 25 according to an embodiment of the present invention. In this embodiment the wireless bicycle charging system comprises the secondary magnet assembly 19 which is mountable to a kickstand 25 of the electric bicycle 24. This embodiment is particularly advantageous as it combines operating the kickstand 25 for parking the electric bicycle 24 with connecting the bicycle charger unit 17 with the fixed charger unit 16 for wireless charging of the electric bicycle 24. Typically, the fixed charger unit 16 may be mounted to the floor or some charging stall, post, bike rack etc.

When the kickstand 25 is folded outward as indicated by the arrow 25a, this allows the secondary magnet assembly 19 to conveniently engage the primary magnet assembly 18 such that insertion of the secondary core member 4 into the air gap 8 of the primary core member 2 is greatly simplified. For example, users will not need to perform special handling steps of the electric bicycle 24 and/or the fixed charger unit 16 to initiate a charging session as merely parking the electric bicycle 24 through the kickstand 25 at the fixed charger unit 16 is sufficient. In some scenarios it is possible that the user unfolds the kickstand 25 and subsequently rolls the electric bicycle 24 toward the fixed charger unit 16 over a very small distance to insert the secondary core member 4 into the air gap 8 of the primary core member 2.

As further depicted in Figure 5, in an embodiment the secondary communication system 21 may be mounted to a frame of the electric bicycle 24. The rectifier unit may also be mounted to the frame of the electric bicycle 24. In further embodiments the rectifier unit and the secondary communication system 21 may be combined in a single unit mounted to the frame and connected to secondary magnet assembly 19, comprising the secondary coil windings 5 and the auxiliary secondary coil windings 10, by a flexible cable 26 to allow movement of the kickstand 25.

Figure 6 shows a wireless bicycle charging system utilizing a movable arm member 22 pivotally connected to a platform embedded in the floor according to an embodiment of the present invention. In this particular embodiment, the fixed charger unit 16 comprises a floor base 27 configured for embedded placement in a floor surface and wherein the moveable arm member 22 is pivotally connected to the floor base 27, e.g. by means of a hinged connection 28.

In this embodiment the fixed charger unit 16 can be installed flush with a floor surface such as the floor surface of a parking space/garage, so that the fixed charger unit 16 has a low non-intrusive profile and presence. In a further embodiment, the moveable arm member 22 may be a substantially flat hatch member pivotally connected to the floor base 27 between a substantially horizontal position and a substantially vertical position. This embodiment allows the moveable arm member 22 to be positioned flush with the floor base 27 by pivoting the moveable arm member 22 in a horizontal position, such that the fixed charger unit 16 is flush with the floor surface. In this way the parking space can be maintained obstacle free when no bicycle charging is necessary. When pivoting the moveable arm member 22 toward the substantially vertical position, the electric bicycle 24 may be wirelessly charged by means of a kickstand 25 as mentioned above, thus wherein the secondary magnet assembly 19 is mountable to the kickstand 25, and by unfolding the kickstand 25, the secondary magnet assembly 19 is able to engage the primary magnet assembly 18 for inserting the secondary core member 4 into the air gap 8 of the primary core member 2.

In an advantageous embodiment, the floor base 27 comprises an alignment member 29 configured to align the secondary magnet assembly 19 with the primary magnet assembly 18, e.g. to align the secondary core member 4 with the primary core member 2. The alignment member 29 may be used to aid the user aligning the secondary magnet assembly 19 with the primary magnet assembly 18, so that insertion of the secondary core member 4 into the air gap 8 of the primary core member 2 is further facilitated.

In an exemplary embodiment, the alignment member 29 may comprise an alignment pocket 30 which is configured to receive the kickstand 25 of the electrical bicycle 24. This embodiment provides great practically as is allows the user to unfold the kickstand 25 and to place the kickstand 25, e.g. an end portion thereof, into the alignment pocket 30, thereby guaranteeing that the secondary core member 4 is adequately aligned with and positioned into the air gap 8 of the primary core member 2.

In a further embodiment, the movable arm member 22 and the floor base 27 may each comprise a first and a second locking member 31, 32, respectively, wherein the first and second locking members 31, 32 are cooperating locking members for releasably locking the movable arm member 22 to the floor base 27. This embodiment is particularly advantageous when the movable arm member 22 is a substantially flat hatch member pivotally connected to the floor base 27 between the substantially horizontal position and the substantially vertical position. In the horizontal position the hatch member may cover at least in part the floor base 27 and can be locked thereto to prevent accidental use of the moveable arm member 22 and/or to prevent illegal use thereof, for example.

The present invention has been described above with reference to a number of exemplary embodiments as shown in the drawings. Modifications and alternative implementations of some parts or elements are possible, and are included in the scope of protection as defined in the appended claims.

## Claims

1. A magnetic transformer system (1), e.g. for wireless bicycle charging, comprising a primary core member (2) provided with primary coil windings (3) and a secondary core member (4) provided with secondary coil windings (5), wherein the primary and secondary coil windings (3, 5) are arranged for inductive engagement,
wherein the primary core member (2) comprises a first end portion (6) and an opposing second end portion (7) providing an air gap (8) between the first and second end portion (6, 7), wherein the secondary core member (4) is moveably receivable within the air gap (8) of the primary core member (2) and retractable therefrom, and wherein a length (L) of the secondary core member (4) is smaller than a gap distance (D) of the air gap (8);
**characterized in that**
the primary core member (2) further comprises auxiliary primary coil windings (9) and wherein the secondary core member (4) comprises auxiliary secondary coil windings (10), the auxiliary primary and auxiliary secondary coil windings (9, 10) being arranged for auxiliary inductive engagement, and wherein the inductive engagement between the primary and secondary coil windings (3, 5) is substantially orthogonal to the auxiliary inductive engagement between the auxiliary primary and auxiliary secondary coil windings (9, 10).

2. The magnetic transformer system according to claim 1, wherein the length (L) of the secondary core member (4) is at least 2 mm smaller than the gap distance (D) between the first and second end portion (6, 7).

3. The magnetic transformer system according to claim 1 or 2, wherein the primary core member (2) is a U-shaped core member comprising a base section (11) provided with the primary coil windings (3) and spaced apart first and second leg sections (12, 13) each of which projects from the base section (11), wherein the first leg section (12) comprises the first end portion (6) of the primary core member (2) and wherein the second leg section (13) comprises the second end portion (7) of the primary core member (2).

4. The magnetic transformer system according to claim 3, wherein the U-shaped core member comprises an auxiliary primary core portion (14) provided with the auxiliary primary coil windings (9) and projecting from the base section (11) into the air gap (8),
wherein the secondary core member (4) comprises an auxiliary secondary core portion (15) provided with the auxiliary secondary coil windings (10) and projecting from the secondary core member (4), and wherein the auxiliary primary and auxiliary secondary core portions (14, 15) are configured to face each other when the secondary core member (4) is operationally arranged within the air gap (8).

5. The magnetic transformer system according to any one of claims 1-4, wherein the auxiliary primary coil windings (9) comprise thinner wire than wire of the primary coil windings (3), and/or wherein the auxiliary secondary coil windings (10) comprise thinner wire than wire of the secondary coil windings (5).

6. A wireless bicycle charging system for charging an electric bicycle (24), comprising a fixed charger unit (16); a bicycle charger unit (17) for attachment to the electric bicycle (24); and the magnetic transformer system (1) according to any one of claims 1-5, wherein the fixed charger unit (16) is provided with a primary magnet assembly (18) comprising the primary core member (2) with primary coil windings (3) for connection to an AC power source; and
wherein the bicycle charger unit (17) is provided with a secondary magnet assembly (19) comprising the secondary core member (4) with secondary coil windings (5), and a rectifier unit connected to the secondary coil windings (5), the rectifier unit being connectable to a rechargeable battery of the electric bicycle (24).

7. The wireless bicycle charging system according to claim 6, wherein the fixed charger unit (16) further comprises a primary communication system (20) connected to the auxiliary primary coil windings (9) of the primary core member (2) and wherein the bicycle charger unit (17) comprises a secondary communication system (21) connected to the auxiliary secondary coil windings (10).

8. The wireless bicycle charging system according to claim 6 or 7, wherein the fixed charger unit (16) further comprises a moveable arm member (22) provided with a bike engagement portion (23), the bike engagement portion (23) comprising the primary magnet assembly (18) for insertion or retraction of the secondary core member (4) of the secondary magnet assembly (19) into or from the air gap (8) of the primary core member (2).

9. The wireless bicycle charging system according to claim 8, wherein the fixed charger unit (16) comprises a floor base (27) configured for embedded placement in a floor surface, and wherein the moveable arm member (22) is pivotally connected to the floor base (27).

10. The wireless bicycle charging system according to claim 9, wherein the floor base (27) comprises an alignment member (29) configured to align the secondary magnet assembly (19) with the primary magnet assembly (18).

11. The wireless bicycle charging system according to claim 9 or 10, wherein the movable arm member (22) and the floor base (27) each comprise a first and a second locking member (30, 31), respectively, wherein the first and second locking members (30, 31) are cooperating locking members for releasably locking the movable arm member (22) to the floor base (27).

12. The wireless bicycle charging system according to any one of claims 6-11, wherein the secondary magnet assembly (19) is mountable to a kickstand (25) of the electric bicycle (24).

13. The wireless bicycle charging system according to claim 12, when dependent on claim 10, wherein the alignment member (29) is an alignment pocket (30) for receiving the kickstand (25) of the electrical bicycle (24).

14. Use of a magnetic transformer system (1) according to any one of claims 1-5 in a wireless bicycle charging system for charging an electric bicycle (24), wherein the primary core member (2) with the primary coil windings (3) and auxiliary primary coil windings (9) is mountable to a fixed charger unit (16) and wherein the secondary core member (4) with the secondary coil windings (5) and auxiliary secondary coil windings (10) is mountable to the electric bicycle (24).

## Patentansprüche

1. Magnetisches Transformatorsystem (1), z. B. zum drahtlosen Laden eines Fahrrads, ein primäres Kernelement (2), das mit Primärspulenwicklungen (3) versehen ist, und ein sekundäres Kernelement (4) umfassend, das mit Sekundärspulenwicklungen (5) versehen ist, wobei die Primär- und die Sekundärspulenwicklungen (3, 5) zur induktiven Kopplung angeordnet sind,
wobei das primäre Kernelement (2) einen ersten Endabschnitt (6) und einen gegenüberliegenden zweiten Endabschnitt (7) umfasst, wobei ein Luftspalt (8) zwischen dem ersten und dem zweiten Endabschnitt (6, 7) bereitgestellt ist, wobei das sekundäre Kernelement (4) beweglich in dem Luftspalt (8) des primären Kernelements (2) aufnahmefähig ist und daraus herausnahmefähig ist und wobei eine Länge (L) des sekundären Kernelements (4) kleiner ist als ein Spaltabstand (D) des Luftspalts (8); **dadurch gekennzeichnet, dass**
das primäre Kernelement (2) weiterhin zusätzliche Primärspulenwicklungen (9) umfasst, und wobei das sekundäre Kernelement (4) zusätzliche Sekundärspulenwicklungen (10) umfasst, wobei die zusätzlichen Primär- und die zusätzlichen Sekundärspulenwicklungen (9, 10) zur zusätzlichen induktiven Kopplung angeordnet sind, und wobei die induktive Kopplung zwischen den Primär- und den Sekundärspulenwicklungen (3, 5) im Wesentlichen orthogonal ist zu der zusätzlichen induktiven Kopplung zwischen den zusätzlichen Primär- und den zusätzlichen Sekundärspulenwicklungen (9, 10).

2. Magnetisches Transformatorsystem nach Anspruch 1, wobei die Länge (L) des sekundären Kernelements (4) mindestens 2 mm kleiner ist als der Spaltabstand (D) zwischen dem ersten und dem zweiten Endabschnitt (6, 7).

3. Magnetisches Transformatorsystem nach Anspruch 1 oder 2, wobei das primäre Kernelement (2) ein U-förmiges Kernelement ist, das einen Basisabschnitt (11), der mit den Primärspulenwicklungen (3) versehen ist, und voneinander beabstandet einen ersten und einen zweiten Zweigabschnitt (12, 13) umfasst, von denen jeder aus dem Basisabschnitt (11) vorsteht, wobei der erste Zweigabschnitt (12) den ersten Endabschnitt (6) des primären Kernelements (2) umfasst und wobei der zweite Zweigabschnitt (13) den zweiten Endabschnitt (7) des primären Kernelements (2) umfasst.

4. Magnetisches Transformatorsystem nach Anspruch 3, wobei das U-förmige Kernelement einen zusätzlichen primären Kernabschnitt (14) umfasst, der mit den zusätzlichen Primärspulenwicklungen (9) versehen ist und aus dem Basisabschnitt (11) in den Luftspalt (8) vorsteht,
wobei das sekundäre Kernelement (4) einen zusätzlichen sekundären Kernabschnitt (15) umfasst, der mit den zusätzlichen Sekundärspulenwicklungen (10) versehen ist und aus dem sekundären Kernelement (4) vorsteht, und
wobei der zusätzliche primäre und der zusätzliche sekundäre Kernabschnitt (14, 15) eingerichtet sind, um einander gegenüber zu stehen, wenn das sekundäre Kernelement (4) betriebsfähig innerhalb des Luftspalts (8) angeordnet ist.

5. Magnetisches Transformatorsystem nach einem der Ansprüche 1 bis 4, wobei die zusätzlichen Primärspulenwicklungen (9) dünneren Draht umfassen als Draht der Primärspulenwicklungen (3) und/oder wobei die zusätzlichen Sekundärspulenwicklungen (10) dünneren Draht umfassen als Draht der Sekundärspulenwicklungen (5) .

6. Drahtloses Fahrradladesystem zum Laden eines elektrischen Fahrrads (24), umfassend eine feste Ladegeräteinheit (16); eine Fahrradladegeräteinheit (17) zur Befestigung an dem elektrischen Fahrrad (24); und das magnetische Transformatorsystem (1) nach einem der Ansprüche 1 bis 5, wobei die feste Ladegeräteinheit (16) mit einer Primärmagnetanordnung (18) versehen ist, die das primäre Kernelement (2) mit Primärspulenwicklungen (3) zum Anschluss an eine Wechselstromquelle umfasst; und
wobei die Fahrradladegeräteinheit (17) mit einer Sekundärmagnetanordnung (19) versehen ist, die das sekundäre Kernelement (4) mit Sekundärspulenwicklungen (5) und eine Gleichrichtereinheit umfasst, die mit den Sekundärspulenwicklungen (5) verbunden ist, wobei die Gleichrichtereinheit an eine wiederaufladbare Batterie des elektrischen Fahrrads (24) anschließbar ist.

7. Drahtloses Fahrradladesystem nach Anspruch 6, wobei die feste Ladegeräteinheit (16) weiterhin ein primäres Kommunikationssystem (20) umfasst, das mit den zusätzlichen Primärspulenwicklungen (9) des primären Kernelements (2) verbunden ist, und wobei die Fahrradladegeräteinheit (17) ein sekundäres Kommunikationssystem (21) umfasst, das mit den zusätzlichen Sekundärspulenwicklungen (10) verbunden ist.

8. Drahtloses Fahrradladesystem nach Anspruch 6 oder 7, wobei die feste Ladegeräteinheit (16) weiterhin ein bewegliches Armelement (22) umfasst, das mit einem Fahrradkopplungsabschnitt (23) versehen ist, wobei der Fahrradkopplungsabschnitt (23) die Primärmagnetanordnung (18) zur Einführung oder Herausnahme des sekundären Kernelements (4) der Sekundärmagnetanordnung (19) in den oder aus dem Luftspalt (8) des primären Kernelements (2) umfasst.

9. Drahtloses Fahrradladesystem nach Anspruch 8, wobei die feste Ladegeräteinheit (16) eine Bodenbasis (27) umfasst, die zur eingebetteten Platzierung in einer Bodenoberfläche eingerichtet ist, und wobei das bewegliche Armelement (22) drehgelenkig mit der Bodenbasis (27) verbunden ist.

10. Drahtloses Fahrradladesystem nach Anspruch 9, wobei die Bodenbasis (27) ein Ausrichtungselement (29) umfasst, das eingerichtet ist, um die Sekundärmagnetanordnung (19) mit der Primärmagnetanordnung (18) auszurichten.

11. Drahtloses Fahrradladesystem nach Anspruch 9 oder 10, wobei das bewegliche Armelement (22) und die Bodenbasis (27) jeweils ein erstes bzw. ein zweites Verriegelungselement (30, 31) umfassen, wobei das erste und das zweite Verriegelungselement (30, 31) zusammenwirkende Verriegelungselemente zum lösbaren Verriegeln des beweglichen Armelements (22) an der Bodenbasis (27) sind.

12. Drahtloses Fahrradladesystem nach einem der Ansprüche 6 bis 11, wobei die Sekundärmagnetanordnung (19) an einen Kippständer (25) des elektrischen Fahrrads (24) montierbar ist.

13. Drahtloses Fahrradladesystem nach Anspruch 12, wenn abhängig von Anspruch 10, wobei das Ausrichtungselement (29) eine Ausrichtungsvertiefung (30) zum Aufnehmen des Kippständers (25) des elektrischen Fahrrads (24) ist.

14. Verwenden eines magnetischen Transformatorsystems (1) nach einem der Ansprüche 1 bis 5 in einem drahtlosen Fahrradladesystem zum Laden eines elektrischen Fahrrads (24), wobei das primäre Kernelement (2) mit den Primärspulenwicklungen (3) und zusätzlichen Primärspulenwicklungen (9) an eine feste Ladegeräteinheit (16) montierbar ist und wobei das sekundären Kernelement (4) mit den Sekundärspulenwicklungen (5) und zusätzlichen Sekundärspulenwicklungen (10) an das elektrische Fahrrad (24) montierbar ist.

## Revendications

1. Système de transformateur magnétique (1), par ex. pour la charge sans fil d'une bicyclette, comprenant un élément noyau primaire (2) pourvu d'enroulements de bobine primaires (3) et un élément noyau secondaire (4) pourvu d'enroulements de bobine secondaires (5), les enroulements de bobine primaires et secondaires (3, 5) étant agencés pour un couplage par induction,
l'élément noyau primaire (2) comprenant une première partie d'extrémité (6) et une deuxième partie d'extrémité (7) opposée ménageant un entrefer (8) entre les première et deuxième parties d'extrémité (6, 7), l'élément noyau secondaire (4) étant susceptible d'être reçu à l'intérieur de l'entrefer (8) de l'élément noyau primaire (2) et d'en être retiré de façon mobile, et une longueur (L) de l'élément noyau secondaire (4) étant inférieure à une distance d'entrefer (D) de l'entrefer (8) ; **caractérisé en ce que**
l'élément noyau primaire (2) comprend en outre des enroulements de bobine primaires auxiliaires (9), et l'élément noyau secondaire (4) comprend des enroulements de bobine secondaires auxiliaires (10), les enroulements de bobine primaires et secondaires auxiliaires (9, 10) étant agencés pour un couplage par induction auxiliaire, et le couplage par induction entre les enroulements de bobine primaires et secondaires (3, 5) étant sensiblement orthogonal au couplage par induction auxiliaire entre les enroulements primaires auxiliaires et secondaires auxiliaires (9, 10).

2. Système de transformateur magnétique selon la revendication 1, dans lequel la longueur (L) de l'élément noyau secondaire (4) est inférieure d'au moins 2 mm à la distance d'entrefer (D) entre les première et deuxième parties d'extrémité (6, 7).

3. Système de transformateur magnétique selon la revendication 1 ou 2, dans lequel l'élément noyau primaire (2) est un élément noyau en U comprenant un segment formant base (11) pourvu des enroulements de bobine primaires (3) et espacé de premier et deuxième segments formant branches (12, 13) dont chacun fait saillie depuis le segment formant base (11), le premier segment formant branche (12) comprenant la première partie d'extrémité (6) de l'élément noyau primaire (2) et le deuxième segment formant branche (13) comprenant la deuxième partie d'extrémité (7) de l'élément noyau primaire (2).

4. Système de transformateur magnétique selon la revendication 3, dans lequel l'élément noyau en U comprend une partie noyau primaire auxiliaire (14) pourvue des enroulements de bobine primaires auxiliaires (9) et faisant saillie depuis le segment formant base (11) jusque dans l'entrefer (8),
dans lequel l'élément noyau secondaire (4) comprend une partie noyau secondaire auxiliaire (15) pourvue des enroulements de bobine secondaires auxiliaires (10) et faisant depuis l'élément noyau secondaire (4), et
dans lequel les parties noyaux primaire auxiliaire et secondaire auxiliaire (14, 15) sont configurées pour être en regard l'une de l'autre lorsque l'élément noyau secondaire (4) est agencé fonctionnellement à l'intérieur de l'entrefer (8).

5. Système de transformateur magnétique selon l'une quelconque des revendications 1 à 4, dans lequel les enroulements de bobine primaires auxiliaires (9) comprennent un fil plus mince que le fil des enroulements de bobine primaires (3), et/ou dans lequel les enroulements de bobine secondaires auxiliaires (10) comprennent un fil plus mince que le fil des enroulements de bobine secondaires (5).

6. Système de charge sans fil de bicyclette pour charger une bicyclette électrique (24), comprenant une unité chargeur fixe (16) ; une unité chargeur de bicyclette (17) destinée à être attachée à la bicyclette électrique (24) ; et le système de transformateur magnétique (1) selon l'une quelconque des revendications 1 à 5, l'unité chargeur fixe (16) étant pourvue d'un ensemble aimant primaire (18) comprenant l'élément noyau primaire (2) pourvu des enroulements de bobine primaires (3) destiné à être connecté à une source d'alimentation en courant alternatif ; et
dans lequel l'unité chargeur de bicyclette (17) est pourvue d'un ensemble aimant secondaire (19) comprenant l'élément noyau secondaire (4) pourvu des enroulements de bobine secondaires (5), et d'une unité redresseur connectée aux enroulements de bobine secondaires (5), l'unité redresseur étant connectable à une batterie rechargeable de la bicyclette électrique (24).

7. Système de charge sans fil de bicyclette selon la revendication 6, dans lequel l'unité chargeur fixe (16) comprend en outre un système de communication primaire (20) connecté aux enroulements de bobine primaires auxiliaires (9) de l'élément noyau primaire (2), et dans lequel l'unité chargeur de bicyclette (17) comprend un système de communication secondaire (21) connecté aux enroulements de bobine secondaires auxiliaires (10).

8. Système de charge sans fil de bicyclette selon la revendication 6 ou 7, dans lequel l'unité chargeur fixe (16) comprend en outre un élément bras mobile (22) pourvu d'une partie de couplage au vélo (23), et la partie de couplage au vélo (23) comprenant l'ensemble aimant primaire (18) pour permettre d'introduire l'élément noyau secondaire (4) de l'ensemble aimant secondaire (19) dans l'entrefer (8) de l'élément noyau primaire (2) ou de l'en retirer.

9. Système de charge sans fil de bicyclette selon la revendication 8, dans lequel l'unité chargeur fixe (16) comprend un socle au sol (27) configuré pour être encastré dans une surface au sol, et dans lequel l'élément bras mobile (22) est monté pivotant sur le socle au sol (27).

10. Système de charge sans fil de bicyclette selon la revendication 9, dans lequel le socle au sol (27) comprend un élément d'alignement (29) configuré pour aligner l'ensemble aimant secondaire (19) avec l'ensemble aimant primaire (18).

11. Système de charge sans fil de bicyclette selon la revendication 9 ou 10, dans lequel l'élément bras mobile (22) et le socle au sol (27) comprennent chacun un premier, respectivement un deuxième, élément de verrouillage (30, 31), les premier et deuxième éléments de verrouillage (30, 31) étant des éléments de verrouillage qui coopèrent pour verrouiller de façon libérable l'élément bras mobile (22) au socle au sol (27) .

12. Système de charge sans fil de bicyclette selon l'une quelconque des revendications 6 à 11, dans lequel l'ensemble aimant secondaire (19) est susceptible d'être monté sur une béquille (25) de la bicyclette électrique (24) .

13. Système de charge sans fil de bicyclette selon la revendication 12 lorsqu'elle dépend de la revendication 10, dans lequel l'élément d'alignement (29) est un logement d'alignement (30) destiné à recevoir la béquille (25) de la bicyclette électrique (24).

14. Utilisation d'un système de transformateur magnétique (1) selon l'une quelconque des revendications 1 à 5 dans un système de charge sans fil de bicyclette pour charger une bicyclette électrique (24), l'élément noyau primaire (2) pourvu des enroulements de bobine primaires (3) et des enroulements de bobine primaires auxiliaires (9) étant susceptible d'être monté sur une unité chargeur fixe (16) et l'élément noyau secondaire (4) pourvu des enroulements de bobine secondaires (5) et des enroulements de bobine secondaires auxiliaires (10) étant susceptible d'être monté sur la bicyclette électrique (24).
